# EUROPEAN PATENT APPLICATION

(11) **EP 4 212 676 A1**
(43) Date of publication of application: **19.07.2023**
(21) Application number: 21885641.7
(22) Date of filing: 05.08.2021
(51) Int. Cl.: E02F 9/22

(54) **ROUTE SETTING SYSTEM**

(30) Priority: 28.10.2020 JP 2020180781
(71) Applicant: KOBELCO CONSTRUCTION MACHINERY CO., LTD., Hiroshima-shi Hiroshima 731-5161 (JP)
(72) Inventor: AKIYAMA, Masaki, Hiroshima-shi, Hiroshima 731-5161 (JP); DOI, Takayuki, Hiroshima-shi, Hiroshima 731-5161 (JP); YAMASHITA, Koji, Hiroshima-shi, Hiroshima 731-5161 (JP)
(74) Representative: TBK
(86) International application number: PCT/JP2021/029081
(87) International publication number: WO 2022/091519

(57) **Abstract**

A contact of an attachment with an obstacle is suppressed, and concurrently, a wasteful motion of the attachment is suppressed. When determining that an obstacle specific portion exists between a start point and an end point, a controller sets an avoidance path as a target path. The avoidance path is a path along which an attachment specific portion moves from the start point to the end point while the attachment is led to an avoidance operation of avoiding the obstacle. When determining that the obstacle specific portion does not exist between the start point and the end point, the controller sets a non-avoidance path as the target path. The non-avoidance path is a path along which the attachment specific portion moves from the start point to the end point while the attachment is not led to the avoidance operation.

## Description

### Technical Field

The present invention relates to a path setting system for setting a target path of an attachment of a working machine.

### Background Art

For example, Patent Literature 1 and the like disclose a technology for setting a target path of an attachment. According to the technology disclosed in the document, a target path of an attachment is set to keep a specific portion of the attachment (a blade edge of a work equipment) from coming into contact with an obstacle (the current topography).

### Citation List

### Patent Literature

Patent Literature 1: Japanese Unexamined Patent Publication No. 2020-20153

The technology disclosed in the document sets a target path that leads the attachment to a motion avoiding an obstacle. Specifically, the target path is set to lead the attachment to an end position (excavation start position) from a start position (the current location) via a midpoint. However, depending on the position of the attachment and the condition of the obstacle, the attachment is not always required to make a motion avoiding the obstacle. Therefore, the attachment is liable to be led to a motion that results in being wasteful.

### Summary of Invention

An object of the present invention is to provide a path setting system that can suppress a contact of an attachment with an obstacle, and concurrently suppress a wasteful motion of the attachment.

The present invention provides a path setting system. The path setting system is for use in a working machine including a lower travelling body, an upper slewing body, and an attachment, and sets a target path of an attachment specific portion being a specific portion of the attachment. The path setting system includes a three-dimensional information acquisition part and a controller. The upper slewing body is mounted on the lower travelling body slewably about a slewing central axis extending in a vertical direction. The attachment is mounted on the upper slewing body, and performs a work. The three-dimensional information acquisition part acquires three-dimensional information on an obstacle specific portion being a specific portion of an obstacle around the attachment. The controller sets a target path of the attachment specific portion from a predetermined start point to a predetermined end point. The controller determines whether the obstacle specific portion exists or not between the start point of the target path and the end point of the target path on the basis of an acquired result by the three-dimensional information acquisition part. The controller sets an avoidance path as the target path when the obstacle specific portion is determined to exist between the start point of the target path and the end point of the target path, and sets a non-avoidance path as the target path when the obstacle specific portion is determined not to exist between the start point and the end point. The avoidance path is a path along which the attachment specific portion moves from the start point to the end point while the attachment is led to an avoidance operation of avoiding the obstacle. The non-avoidance path is a path along which the attachment specific portion moves from the start point to the end point while the attachment is not led to the avoidance operation.

### Brief Description of Drawings

Fig. 1 is a diagram showing a working machine and a path setting system according to an embodiment of the present invention from a lateral direction.
Fig. 2 is a diagram showing the working machine and the path setting system shown in Fig. 1 from above.
Fig. 3 is a block diagram of the path setting system according to the embodiment of the present invention.
Fig. 4 is a flowchart showing operations of the path setting system according to the embodiment of the present invention.
Fig. 5 is a diagram showing the path setting system and an avoidance path according to the embodiment of the present invention from above.
Fig. 6 is a diagram showing the avoidance path and the like shown in Fig. 5 from the lateral direction.
Fig. 7 is a diagram showing the avoidance path and the like shown in Fig. 5 from rear.
Fig. 8 is a diagram showing the path setting system shown in Fig. 1 and a non-avoidance path from above.
Fig. 9 is a diagram showing the non-avoidance path shown in Fig. 8 from rear.
Fig. 10 is a flowchart showing operations of a path setting system according to a modification 1 of the present invention.
Fig. 11 is a flowchart showing operations of a path setting system according to a modification 2 of the present invention.
Fig. 12 is a diagram showing a path setting system, a target path, and the like according to a modification 4 of the present invention from above.
Fig. 13 is a diagram showing the target path and the like shown in Fig. 12 from rear.

### Description of Embodiments

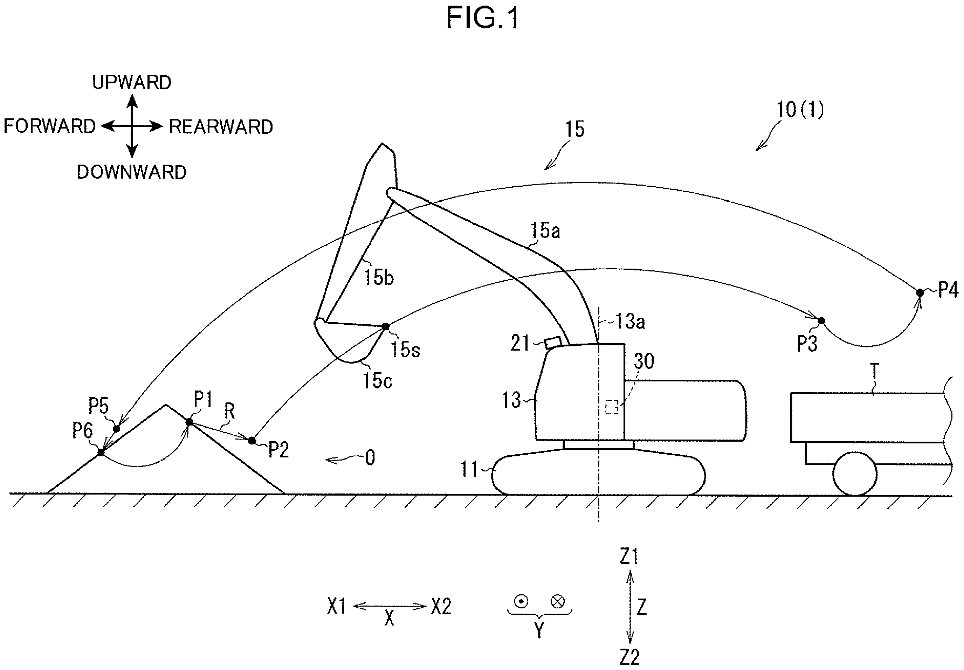

A path setting system 1 according to an embodiment of the present invention will be described with reference to Figs. 1 to 13.

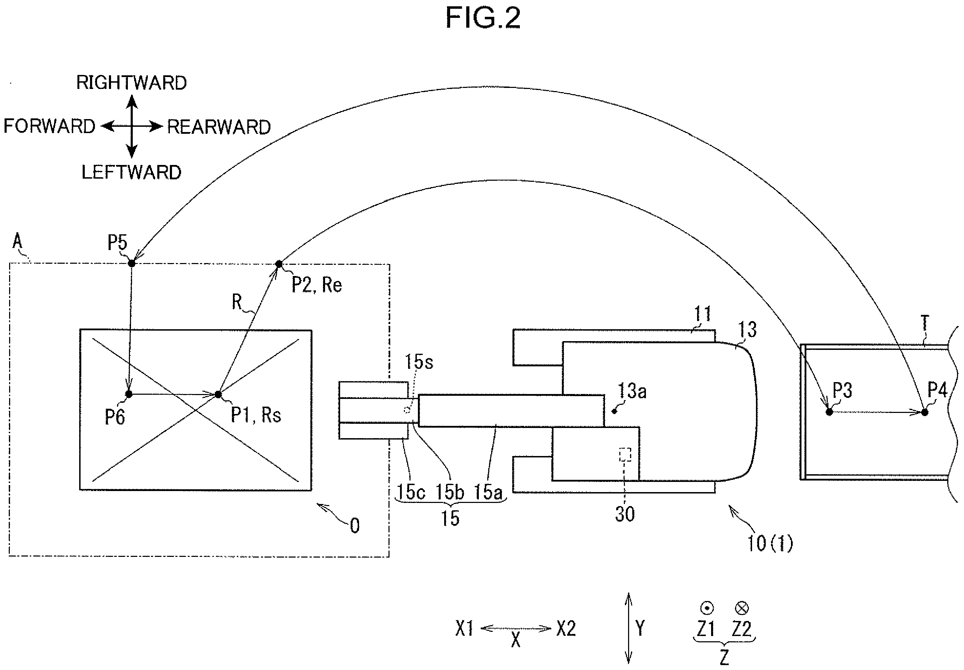

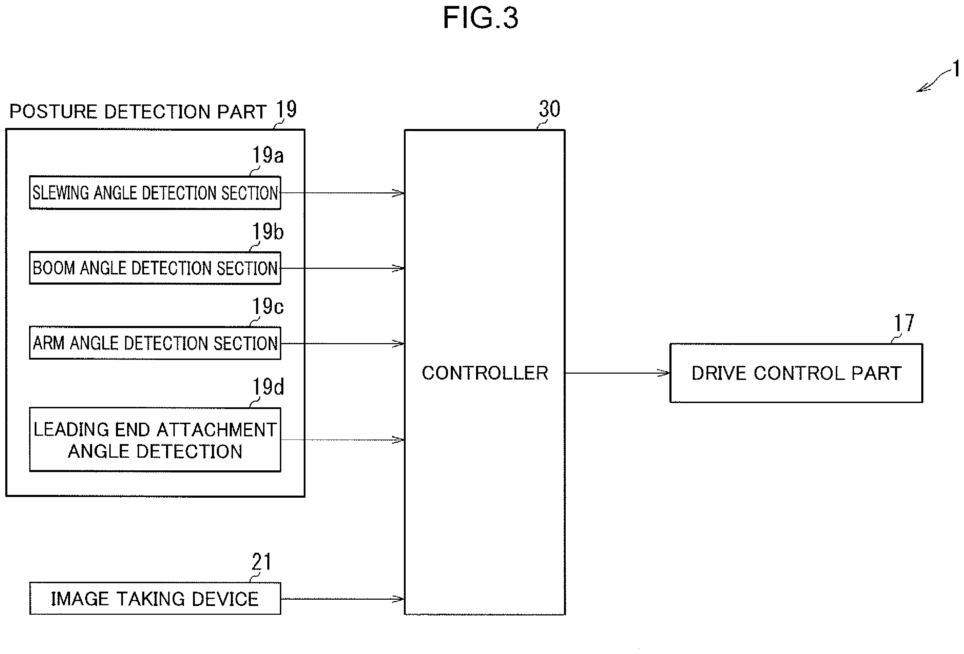

Fig. 1 is a diagram showing a working machine 10 and the path setting system 1 according to the embodiment of the present invention in a lateral direction. Fig. 2 is a diagram showing the working machine 10 and the path setting system 1 shown in Fig. 1 from above. Fig. 3 is a block diagram of the path setting system 1 according to the embodiment.

The path setting system 1 is a system for setting a target path R of an attachment 15 of the working machine 10 shown in Fig. 1. The path setting system 1 includes an image taking device 21 and a controller 30.

The working machine 10 is a machine that performs a work using the attachment 15, and is, for example, a construction machine for performing a construction work, such as an excavator. For example, the working machine 10 is capable of taking a working target (for example, excavating earth and sand), and releasing the taken working target (for example, discharging earth). The working target may be earth and sand, a stone, or waste. The working machine 10 may be, for example, automatically driven. The working machine 10 includes a lower travelling body 11, an upper slewing body 13, the attachment 15, a drive control part 17 (see Fig. 2), and a posture detection part 19 (see Fig. 2).

The lower travelling body 11 slewably supports the upper slewing body 13. The lower travelling body 11 causes the working machine 10 to travel. The upper slewing body 13 is slewably mounted on the lower travelling body 11 about a slewing central axis extending in a vertical direction. The slewing central axis of the upper slewing body 13 with respect to the lower travelling body 11 is defined as the slewing central axis 13a (see Fig. 2).

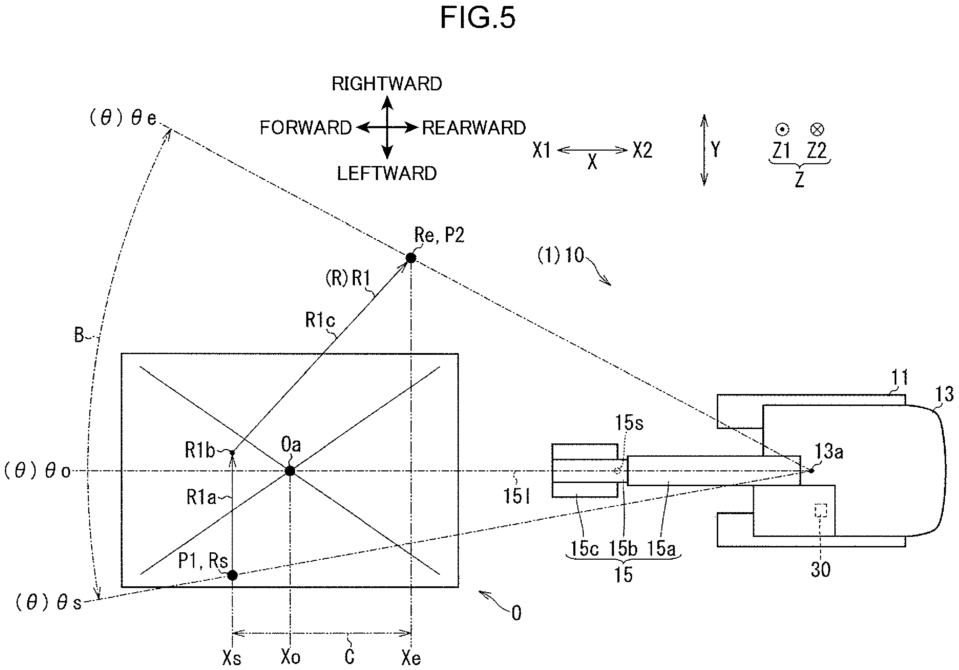

The attachment 15 is attached to the upper slewing body 13, and performs a work. The attachment 15 includes a boom 15a, an arm 15b, and a leading end attachment 15c. The boom 15a is tiltably (vertically swingably) attached to the upper slewing body 13. The arm 15b is swingably (pushably and pullably) attached to a leading end portion of the boom 15a. The leading end attachment 15c is provided on a leading end portion of the attachment 15, and is swingably attached to a leading end portion of the arm 15b. The leading end attachment 15c may be a bucket for shoveling up the working target, or a device (such as a grapple) for nipping the working target. A specific portion of the attachment 15 is referred to as an attachment specific portion 15s. As shown in Fig. 5, a central axis of the attachment 15 being a centerline extending in a longitudinal direction (directions will be described later) is referred to as the centerline 151. In the example shown in Fig. 5, the slewing central axis 13a extends along the centerline 151 when viewed in the longitudinal direction. However, the slewing central axis 13a may be at a position shifted from the centerline 151 in a lateral direction.

### Direction and the like in Connection with Working Machine 10

As shown in Fig. 1, an extension direction of a central axis of the slewing of the upper slewing body 13 (slewing central axis 13a) with respect to the lower travelling body 11 is defined as a vertical direction (Z). As for the vertical direction, a direction from the lower travelling body 11 toward the upper slewing body 13 is defined as an upward direction (Z1), whereas the opposite direction is defined as a downward direction (Z2). As for the longitudinal direction, a direction that is orthogonal to the vertical direction and toward which the attachment 15 protrudes from the upper slewing body 13 is defined as a forward direction (X1), whereas, as for the longitudinal direction, the opposite direction is defined as a rearward direction (X2). A direction orthogonal to both the vertical direction and the longitudinal direction is defined as a lateral direction.

A drive control part 17 (see Fig. 3) controls an actuator that drives the working machine 10. The drive control part 17 controls a motor (not shown) that slews the upper slewing body 13 with respect to the lower travelling body 11. The drive control part 17 controls a cylinder (not shown) that causes the boom 15a to tilt with respect to the upper slewing body 13. The drive control part 17 controls a cylinder that causes the arm 15b to swing with respect to the boom 15a. The drive control part 17 controls a cylinder (not shown) that causes the leading end attachment 15c to swing with respect to the arm 15b.

The posture detection part 19 (see Fig. 3) is a sensor that detects a posture of the working machine 10. The posture detection part 19 includes, for example, an angle sensor. Specifically, as shown in Fig. 3, the posture detection part 19 includes a slewing angle detection section 19a, a boom angle detection section 19b, an arm angle detection section 19c, and a leading end attachment angle detection section 19d. The slewing angle detection section 19a detects a slewing angle θ (relative angle) of the upper slewing body 13 with respect to the lower travelling body 11 shown in Fig. 5. The boom angle detection section 19b (see Fig. 3) detects a swing angle (tilt angle) of the boom 15a with respect to the upper slewing body 13 shown in Fig. 1. The arm angle detection section 19c (see Fig. 3) detects a swing angle of the arm 15b with respect to the boom 15a. The leading end attachment angle detection section 19d (see Fig. 3) detects a swing angle of the leading end attachment 15c with respect to the arm 15b.

The image taking device 21 detects three-dimensional information about an image taking target object, and more specifically, detects three-dimensional information about a position and a shape of the image taking target object. The image taking target object of the image taking device 21 includes an obstacle specific portion Oa (see Fig. 5, to be described later) of an obstacle O around the attachment 15. The image taking target object of the image taking device 21 may be, for example, a working target (e.g., earth and sand) of the attachment 15, or may be an object other than the working target. The image taking target object of the image taking device 21 may include the topography around the attachment 15. The image taking device 21 acquires an image (depth map) containing distance information (depth information). The image taking device 21 may detect three-dimensional information about an image taking target object on the basis of the depth map and a two-dimensional image.

Only one or a plurality of image taking devices 21 may be provided. The image taking device 21 may be mounted on the working machine 10, or may be arranged outside the working machine 10 (for example, at a work site; the same applies to the controller 30). In a case where an image taking device 21 is arranged outside the working machine 10 (not shown), the image taking device 21 is sometimes capable of detecting a position (for example, a position in the shadow of the attachment 15) not detectable in a case where the image taking device 21 is mounted only on the working machine 10. Further, in the case where an image taking device 21 is arranged outside the working machine 10, the path setting system 1 according to the present embodiment may be applied thereto even when the working machine 10 is not provided with an image taking device 21.

This image taking device 21 may be provided with a unit for detecting three-dimensional information using laser light, and for example, may be provided with a LiDAR (Light Detection and Ranging or Laser Imaging Detection and Ranging), or may be provided with a TOF (Time-of-Flight) sensor. The image taking device 21 may be provided with a unit for detecting three-dimensional information using radio waves (e.g., a millimeter-wave radar). The image taking device 21 may be provided with a stereo camera. When the image taking device 21 detects three-dimensional information of a region around the attachment 15 on the basis of three-dimensional information and two-dimensional information, the image taking device 21 may be provided with a camera capable of detecting a two-dimensional image.

The controller 30 executes an input and output of a signal, a calculation such as determination, computation, and the like, and a storage of information and the like. Specifically, the controller 30 is provided with a CPU (Central Processing Unit), a ROM (Read Only Memory) that stores a control program, a RAM (Random Access Memory) that is used as a working area of the CPU, and the like. The controller 30 is inputted with a detection result of the posture detection part 19 (see Fig. 3) and information about the image taken by the image taking device 21. The controller 30 constitutes the three-dimensional information acquisition part of the present invention together with the image taking device 21. The three-dimensional information acquisition part acquires three-dimensional information about an obstacle specific portion Oa being a specific portion of an obstacle O around the attachment 15. Here, the controller 30 identifies the obstacle specific portion Oa on the basis of the information about the image taken by the image taking device 21.

Further, the controller 30 sets (for example, generates) a target path R of an attachment specific portion 15s from a predetermined start point to a predetermined end point. The controller 30 may set a path (for example, a path of the attachment specific portion 15s) of the attachment 15 other than the target path R. The controller 30 causes the working machine 10 to automatically operate by controlling the drive control part 17 (see Fig. 3).

### Example of Work by Working Machine 10

The working machine 10 performs a work that involves a movement of the attachment 15. The attachment 15 includes an attachment specific portion 15s. The attachment specific portion 15s is, for example, a leading end portion of the leading end attachment 15c. The attachment specific portion 15s may include a point or a range. The movement of the attachment specific portion 15s is caused by at least one of the slewing of the upper slewing body 13, the tilting of the boom 15a, a swing of the arm 15b with respect to the boom 15a, and a swing of the leading end attachment 15c with respect to the arm 15b.

Specific examples of a moving path of the attachment specific portion 15s are described below.

[Example 1A] The attachment 15 performs a motion (lift and turn) of lifting the working target taken and turning. At this moment, as shown in Fig. 2, the attachment specific portion 15s moves from a position P1 to a position P3 via a position P2. The position P1 is a position where the attachment 15 took the working target (for example, the position where the attachment 15 excavated earth and sand). The position P2 will be described later. The position P3 is a position where the attachment 15 starts releasing the working target (for example, earth discharge start position).

[Example 1B] The attachment 15 releases the working target (for example, discharges the earth), and for example, charges the working target onto a transport vehicle T. At this moment, the leading end attachment 15c shown in Fig. 1 swings with respect to the arm 15b. Consequently, the attachment specific portion 15s moves from the position P3 to a position P4. The position P4 is a position where the attachment 15 completes the release of the working target (for example, earth discharge completion position).

[Example 1C] The attachment 15 performs a motion (return slewing) of returning from the position where the attachment 15 released the working target to the position where the attachment 15 takes the working target. At this moment, as shown in Fig. 2, the attachment specific portion 15s moves from the position P4 to a position P6 via a position P5. The position P5 will be described later. The position P6 is a position where the attachment 15 starts taking the working target (for example, earth and sand excavation start position).

[Example 1D] The attachment 15 takes the working target (for example, excavates earth and sand). At this moment, the leading end attachment 15c shown in Fig. 1 swings with respect to the arm 15b. Consequently, the attachment specific portion 15s moves from the position P6 to the position P1.

As shown in Fig. 2, the controller 30 defines a path setting target area A and a region except for the area around the attachment 15. The path setting target area A is a region (calculation target area) about which the path setting system 1 sets the target path R of the attachment specific portion 15s. The path setting system 1 may set a path of the attachment specific portion 15s outside the path setting target area A (extra-areal path) in any manner. The extra-areal path may be, for example, a path preliminarily stored in the controller 30. The extra-areal path may be, for example, a path (teaching path) which is a moving path of the attachment 15 stored in a storage part of the controller 30 and the like when an operator manipulates the working machine 10 to move the attachment 15 in advance.

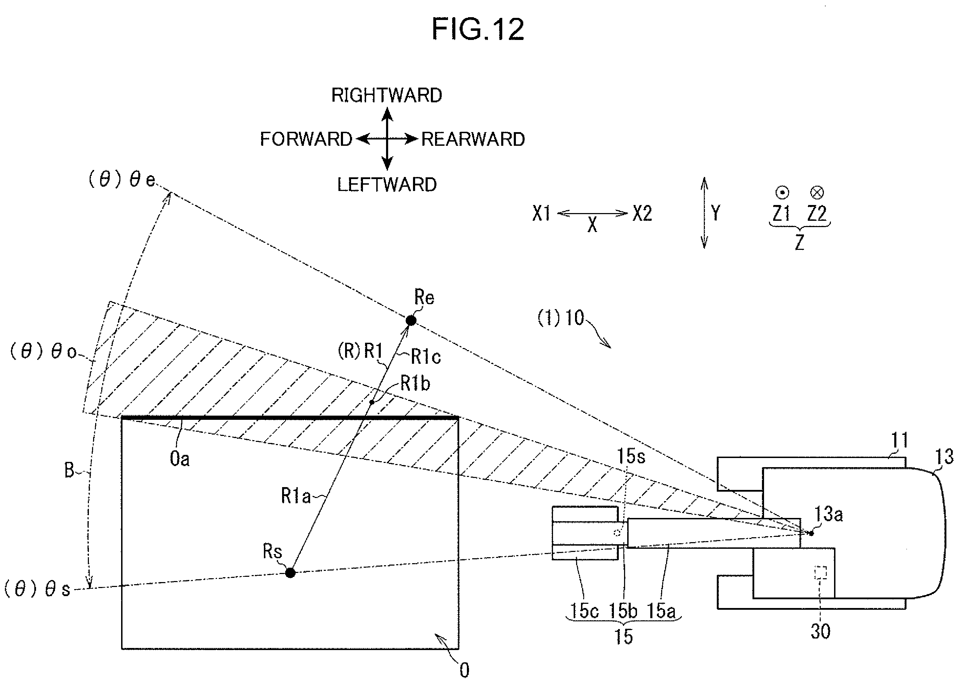

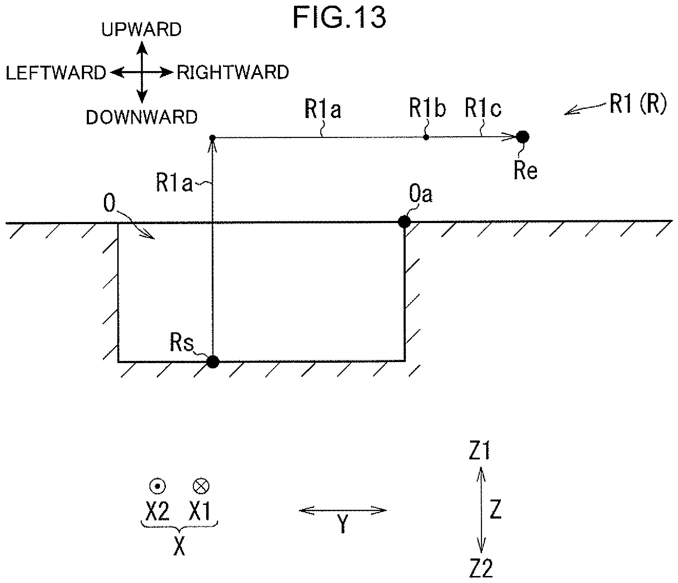

There is a case where an obstacle O exists around the attachment 15 in a work site. The obstacle O is an object that is liable to be in contact with the attachment 15 when the attachment 15 moves. The obstacle O may be a topography (a part having a shape of a mountain, a part having a shape of a hole, or the like). The obstacle O may be a working target (e.g., earth and sand, waste). The obstacle O may be a topography and concurrently a working target, and for example, may be a hill of earth and sand, or may be a hole (deep excavation) excavated to indent the ground (see Figs. 12 and 13). The obstacle O may be an object that is not a topography nor a working target.

### Summary of Setting of Target Path R

As shown in Fig. 5, the target path R is a moving path to which the attachment specific portion 15s is led. The controller 30 changes a way of setting a target path R between a start point Rs and an end point Re depending on whether or not an obstacle specific portion Oa exists between the start point Rs and the end point Re of the target path R. The start point Rs is a start point of the movement when the attachment specific portion 15s is moved along the target path R. The end point Re is an end point of the movement when the attachment specific portion 15s is moved along the target path R. Each of the start point Rs and the end point Re constitutes three-dimensional information, and is expressed by coordinates indicative of a three-dimensional position. The controller 30 sets the start point Rs and the end point Re, respectively, according to a work of the working machine 10 (attachment 15) shown in examples described above.

The target path R may include a part of the moving path or the entire moving path of the attachment specific portion 15s when the working machine 10 performs a work.

[Example 2A] For example, as shown in Fig. 2, the target path R may constitute a part of a path of the lift and turn (see [Example 1A] above), and specifically, may be the part from the position P1 to the position P2.

[Example 2B] For example, the target path R may constitute a part of a path of the return slewing (see [Example 1C] above), and specifically, may be the part from the position P5 to the position P6.

[Example 2C] The target path R may be the entire path of the lift and turn (the path from the position P1 to the position P3).

[Example 2D] The target path R may be the entire path of the return slewing (the path from the position P4 to the position P6).

### Details on Setting of Target Path R

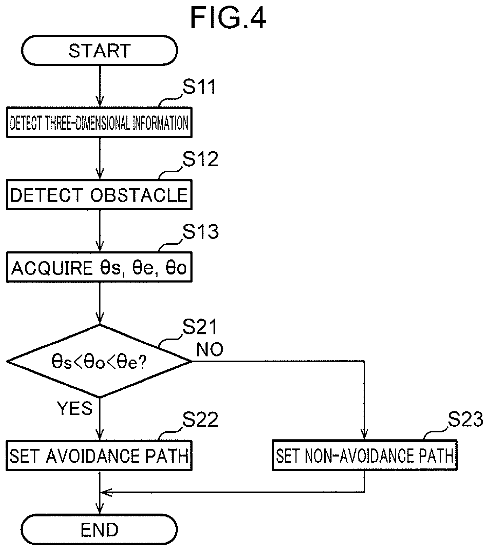

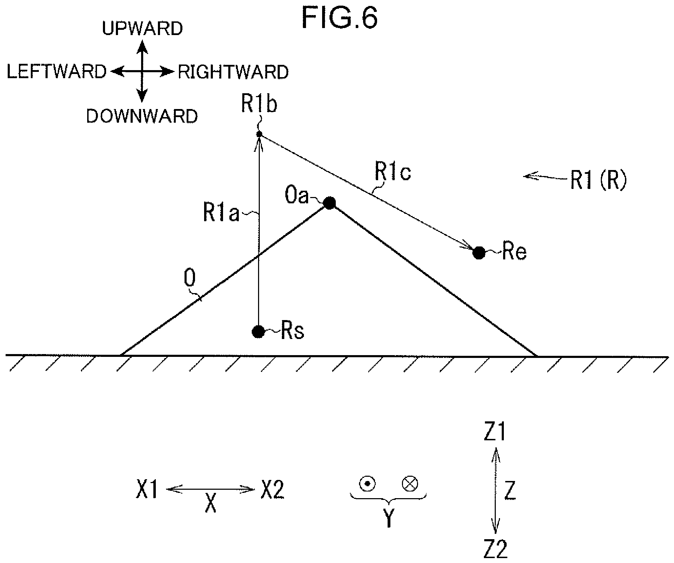

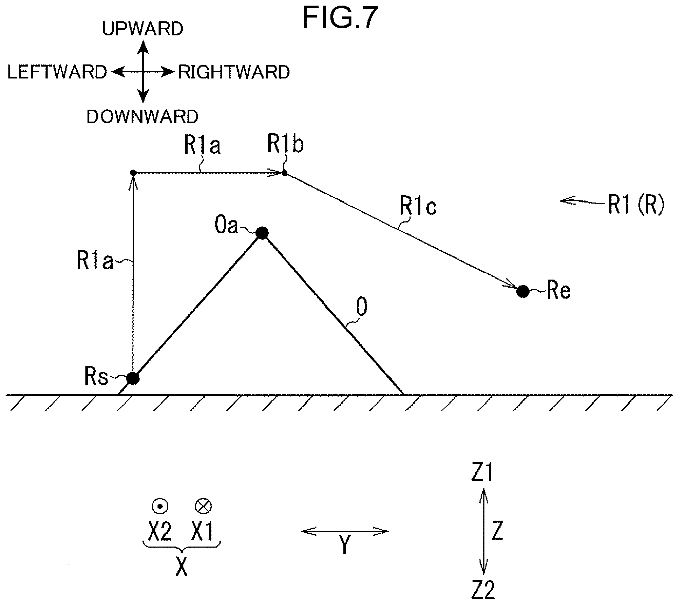

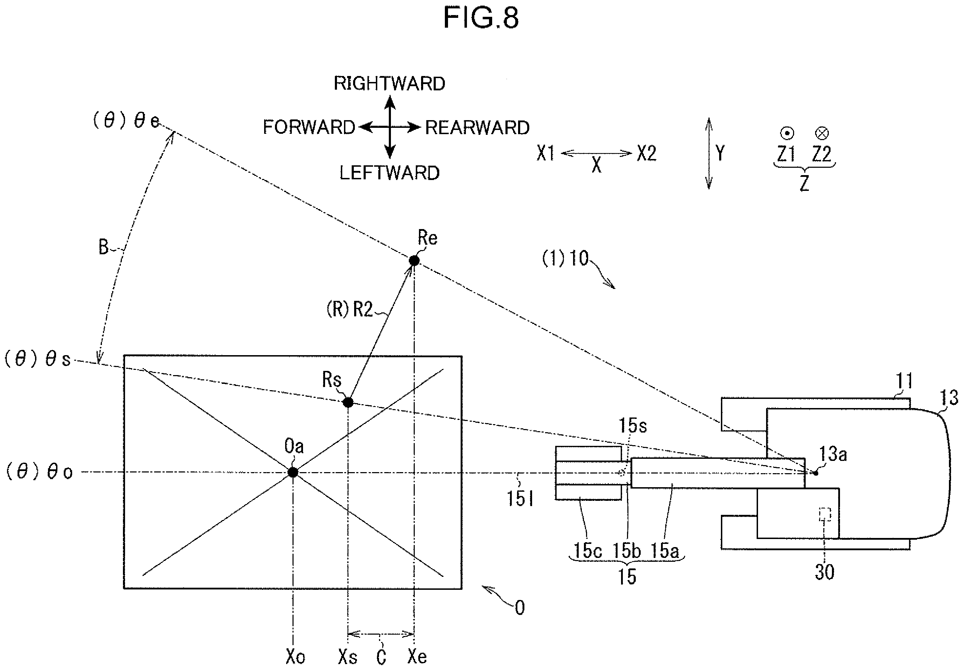

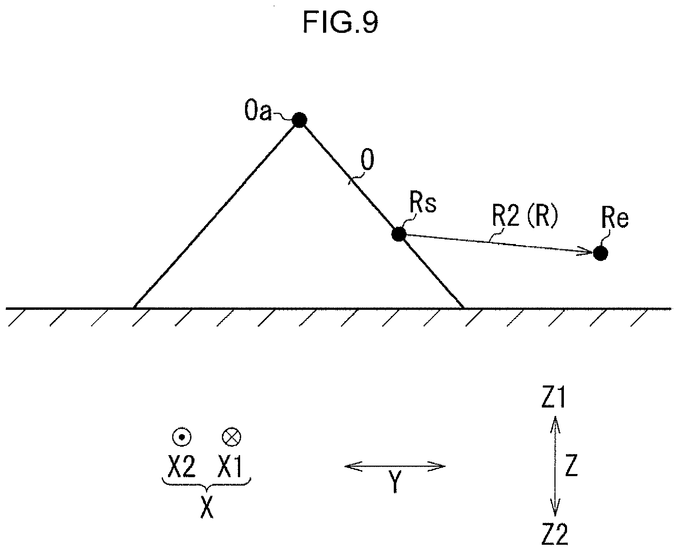

Fig. 4 is a flowchart showing operations of the path setting system 1 according to the present embodiment. Fig. 5 is a diagram showing the path setting system 1 and an avoidance path R1 according to the present embodiment from above. Fig. 6 is a diagram showing the avoidance path R1 and the like shown in Fig. 5 from the lateral direction. Fig. 7 is a diagram showing the avoidance path R1 and the like shown in Fig. 5 from rear. Fig. 8 is a diagram showing the path setting system 1 and a non-avoidance path R2 from above. Fig. 9 is a diagram showing the non-avoidance path R2 shown in Fig. 8 from rear.

The setting of the target path R will be described with reference to the flowchart and the like in Fig. 4. Each step (Steps S11 to S23) in the flowchart will be described with reference to Fig. 4. A series of operations (operations from the start to the end) disclosed in the chart are executed, for example, in each cycle when the attachment specific portion 15s shown in Fig. 5 is at the start point Rs (for example, in each excavation cycle of earth and sand).

In Step S11 (see Fig. 4), the image taking device 21 shown in Fig. 1 detects three-dimensional information of a periphery of the attachment 15. The three-dimensional information detected by the image taking device 21 is input to the controller 30.

In Step S12 (see Fig. 4), the controller 30 shown in Fig. 5 detects (extracts, calculates, identifies) the obstacle O from the three-dimensional information of the periphery of the attachment 15. The controller 30 calculates the three-dimensional information of the obstacle specific portion Oa. The obstacle specific portion Oa may include a part of the obstacle O, or the entire obstacle O.

[Example 3A] As shown in Fig. 6, the obstacle specific portion Oa may include a point being a part of the obstacle O. For example, the obstacle specific portion Oa may include a top (the highest point, the summit) of an obstacle O having a shape of a mountain, and specifically, for example, may be a top of a hill of earth and sand.

[Example 3B] The obstacle specific portion Oa may include a linear portion being a part of the obstacle O. For example, the obstacle specific portion Oa may be an edge of a hole formed in the ground (see the modification 4 described below; see Figs. 12 and 13).

[Example 3C] The obstacle specific portion Oa may include a surface of the obstacle O. Specifically, for example, the obstacle specific potion Oa may be a surface constituting a hill of earth and sand, or a surface (inner surface) constituting a hole.

[Example 3D] The obstacle specific portion Oa may exist only at one position (for example, at one point), or may exist at a plurality of positions. The following description will be made mainly about the case where the obstacle specific portion Oa includes a point at the top of a hill of earth and sand.

### Way of Determining Whether Obstacle O Exists or not

As described below, the controller 30 determines whether the obstacle specific portion Oa exists or not between the start point Rs and the end point Re of the target path R shown in Fig. 5 (Step S21 described below; see Fig.4). Hereinafter, the determination is referred to as "the determination as to whether the obstacle O exists or not". The determination as to whether the obstacle O exists or not may be executed on the basis of the slewing angle θ, or may be executed on the basis of a position in the longitudinal direction (longitudinal position, a position in a depth direction viewed from the upper slewing body 13; see the modification 1 to be described later). Here, the description will be made about the case where the controller 30 determines whether the obstacle O exists or not on the basis of the slewing angle θ.

In Step S13 (see Fig. 4), the controller 30 acquires a start point slewing angle 8s, an end point slewing angle θe, and an obstacle slewing angle θο on the basis of the information about the image taken by the image taking device 24 and the like.

The start point slewing angle θs is a slewing angle θ when the attachment specific portion 15s is at the start point Rs. More specifically, the start point slewing angle θs refers to a slewing angle θ when the start point Rs lies on a centerline 151 of the attachment 15 when viewed in the vertical direction.

For example, the start point slewing angle θs is acquired as follows.

[Example 4A] The slewing angle θ detected by the slewing angle detection section 19a (see Fig. 3) when the attachment specific portion 15s is actually at a position (for example, point P1) corresponding to the start point Rs may be defined as the start point slewing angle θs. A specific example of this case is described below. When the motion of taking a working target by the attachment 15 is completed, the attachment specific portion 15s is arranged at the point P1. The controller 30 defines the location of the attachment specific portion 15s at that moment as the start point Rs. Thereafter, the slewing angle θ when the attachment specific portion 15s is at the point P1 is detected by the slewing angle detection section 19a (see Fig. 3). The controller 30 defines the detected slewing angle θ as the start point slewing angle θs.

[Example 4B] The start point slewing angle θs may be acquired without an actual arrangement of the attachment specific portion 15s at a position (for example, the point P1) corresponding to the start point Rs. Specifically, the controller 30 may calculate a slewing angle θ on the assumption that the attachment specific portion 15s is at the start point Rs on the basis of the three-dimensional information of the start point Rs preliminarily set, and define the calculated slewing angle θ as the start point slewing angle Θs.

The end point slewing angle Θe is a slewing angle θ when the attachment specific portion 15s is at the end point Re. Specifically, the end point slewing angle Θe is a slewing angle θ when the end point Re lies on the centerline 151 of the attachment 15 when viewed in the vertical direction. A slewing angle θ detected by the slewing angle detection section 19a (see Fig. 3) when the attachment specific portion 15s is actually at a position (for example, the point P2) corresponding to the end point Re may be defined as the end point slewing angle Θe (see [Example 4A] above). Further, the end point slewing angle θe may be acquired through a calculation by the controller 30 without an actual arrangement of the attachment specific portion 15s at the position (for example, point P2) corresponding to the end point Re (see [Example 4B] above).

The obstacle slewing angle θο is a slewing angle θ when the attachment specific portion 15s is at the location of the obstacle specific portion Oa. Specifically, the obstacle slewing angle θο is a slewing angle θ when the obstacle specific portion Oa lies on the centerline 151 of the attachment 15 when viewed in the vertical direction. A slewing angle θ detected by the slewing angle detection section 19a (see Fig. 3) when the attachment specific portion 15s is actually at a position corresponding to the obstacle specific portion Oa may be defined as the obstacle slewing angle θο (see [Example 4A] above). Further, the obstacle slewing angle θo may be acquired through a calculation by the controller 30 without an actual arrangement of the attachment specific portion 15s at the position corresponding to the obstacle specific portion Oa (see [Example 4B] above).

As described above, the controller 30 functions as a determinative information acquisition part that acquires information (determinative information) for determining whether the obstacle specific portion Oa exists or not between the start point Rs and the end point Re of the target path R.

In Step S21 (see Fig. 4), the controller 30 determines whether the obstacle O exists or not. In Fig. 4, positional relationships among the above points are simply expressed by inequality symbols. The same applies to the other steps to be described later. When determining that the obstacle specific portion Oa exists between the start point Rs and the end point Re (YES in Step S21), the controller 30 sets an avoidance path R1 as the target path R (Step S22). In this example, the controller 30 determines that "the obstacle specific portion Oa exists between the start point Rs and the end point Re" when an obstacle slewing angle θo exists between a start point slewing angle as and an end point slewing angle Θe (within an angle range B). Accordingly, the controller 30 functions as a determination part that determines whether the obstacle specific portion Oa exists or not between the start point Rs and the end point Re of the target path R on the basis of an acquired result by the three-dimensional information acquisition part.

As shown in Fig. 8, when determining that the obstacle specific portion Oa does not exist between the start point Rs and the end point Re (NO in Step S21), the controller 30 sets a non-avoidance path R2 as the target path R (Step S23). In this example, the controller 30 determines that "the obstacle specific portion Oa does not exist between the start point Rs and the end point Re" when an obstacle slewing angle θο does not exist between the start point slewing angle θs and the end point slewing angle θe (within the angle range B), and thus sets the non-avoidance path R2 as the target path R.

A slewing direction toward which the attachment specific portion 15s is slewed about the slewing central axis 13a from the start point slewing angle Θs to the end point slewing angle θe is defined as "a target slewing direction". "Between the start point slewing angle θs and the end point slewing angle Θe" described above indicates a range between the start point slewing angle θs and the end point slewing angle θe covered by the attachment specific portion 15s slewed toward the target slewing direction. "Between the start point slewing angle θs and the end point slewing angle Θe" described above does not indicate a range between the start point slewing angle Θs and the end point slewing angle θe covered by the attachment specific portion 15s slewed toward a direction opposite to the target slewing direction. The angle range B is, for example, 180° or less.

In Step S22 (see Fig. 4), as shown in Fig. 5, the controller 30 sets the avoidance path R1 as the target path R. The avoidance path R1 is a path along which the attachment specific portion 15s moves from the start point Rs to the end point Re while the attachment 15 performs an avoidance motion avoiding the obstacle O (see Fig. 5 to Fig. 7). The avoidance path R1 includes an avoidance operation path R1a, an avoidance position Rlb, and a post-avoidance path R1c.

The avoidance operation path R1a is a part of the avoidance path R1 where an avoidance operation is performed by the attachment 15, the path along which the attachment specific portion 15s moves from the start point Rs to the avoidance position R1b. The avoidance operation by the attachment 15 may be performed in various ways.

[Example 6A] The avoidance operation may be a motion avoiding the obstacle specific portion Oa (for example, a point), a motion avoiding a region broader than the obstacle specific portion Oa (for example, a region including a periphery of the obstacle specific portion Oa), or a motion avoiding the entire obstacle O.

[Example 6B] In the avoidance operation, the attachment specific portion 15s may be caused to avoid the obstacle O, or a region of the attachment 15 broader than the attachment specific portion 15s may be caused to avoid the obstacle O. In the avoidance operation, the entire attachment 15 may be caused to avoid the obstacle O. The controller 30 calculates a locus of the attachment 15 when the attachment 15 is moved on the basis of a posture of the attachment 15 and shape information of the attachment 15. For example, the controller 30 calculates an avoidance path R1 that leads the entire attachment 15 to avoid the obstacle O on the basis of this locus of the attachment 15.

[Example 6C] The avoidance operation may be a motion of the attachment 15 moving along a level higher than the obstacle specific portion Oa to pass over a position of the obstacle specific portion Oa (to the avoidance position R1b) from a position above the start point Rs (see Fig. 7). For example, the avoidance operation may be a motion of the attachment 15 moving along a level higher than the obstacle specific portion Oa beyond the obstacle slewing angle θο from the start point slewing angle θs shown in Fig. 5. Specifically, the attachment specific portion 15s is moved upward from the start point Rs to a level higher than the obstacle specific portion Oa (see Fig. 7). Subsequently, the attachment specific portion 15s is moved in the lateral direction beyond the obstacle slewing angle θο (to the avoidance position R1b) from the position of the start point slewing angle Θs.

Besides, the avoidance operation may be a motion of the attachment 15 moving along a level higher than the obstacle specific portion Oa to pass over an obstacle longitudinal position Xo (to be described later) from a start point longitudinal position Xs (to be described later).

[Example 6D] The avoidance operation may include any motion as long as the attachment 15 can avoid the obstacle O. For example, the avoidance operation may be a motion of the attachment 15 moving along a surface of the obstacle O.

The post-avoidance path R1c is a path along which the attachment 15 moves from the position beyond the obstacle O (the avoidance position R1b) to the end point Re. For example, the post-avoidance path R1c may be a path allowing the attachment specific portion 15s to directly reach the end point Re from the avoidance position R1b (see the later description about the non-avoidance path R2). The post-avoidance path R1c may be a path along which the attachment specific portion 15s moves via a waypoint preliminarily set in the controller 30. The post-avoidance path R1c may also be a path along which the attachment specific portion 15s moves following a path preliminarily set in the controller 30.

In Step S23 (see Fig. 4), as shown in Fig. 8, the controller 30 sets a non-avoidance path R2 as the target path R. The non-avoidance path R2 is a path along which the attachment specific portion 15s moves from the start point Rs to the end point Re while the attachment 15 is not led to the avoidance operation.

[Example 7A] The non-avoidance path R2 is, for example, a path allowing the attachment specific portion 15s to directly reach the end point Re from the start point Rs. For example, the non-avoidance path R2 may be the shortest path from the start point Rs to the end point Re (see Fig. 9), and specifically, may be a straight path.

[Example 7B] For example, the non-avoidance path R2 may be a path allowing the working machine 10 to operate at the maximum efficiency when causing the attachment specific portion 15s to move from the start point Rs to the end point Re (specifically, the path with which the energy consumption is minimized).

[Example 7C] The non-avoidance path R2 may be a path along which the attachment specific portion 15s moves following a path preliminarily set. In this case, the avoidance path R1 may be a path resulting from a correction of the path preliminarily set (i.e., the non-avoidance path R2).

The controller 30 outputs an instruction (i.e., inputs an instruction signal) to the drive control part 17 (see Fig. 3) so as to move the attachment specific portion 15s along the target path R having been set. Consequently, the working machine 10 is controlled so that the attachment specific portion 15s moves along the target path R.

The path setting system 1 shown in Fig. 1 exhibits the following effect. The path setting system 1 is used in the working machine 10, and includes the image taking device 21 and the controller 30. The upper slewing body 13 of the working machine 10 is slewably mounted on the lower travelling body 11. The attachment 15 is mounted on the upper slewing body 13, and performs a work. The image taking device 21, along with the controller 30, acquires three-dimensional information on the obstacle specific portion Oa being a specific portion of the obstacle O around the attachment 15 shown in Fig. 5. The image taking device 21 itself may include the obstacle specific portion Oa, and have a function of identifying the location thereof. The controller 30 sets the target path R of the attachment specific portion 15s being a specific portion of the attachment 15 from a predetermined start point to a predetermined end point.

The controller 30 sets the avoidance path R1 as the target path R when the obstacle specific portion Oa is determined to exist between the start point Rs of the target path R and the end point Re of the target path R. The avoidance path R1 is a path along which the attachment specific portion 15s moves from the start point Rs to the end point Re while the attachment 15 is led to an avoidance operation of avoiding the obstacle O.

As shown in Fig. 8, when determining that the obstacle specific portion Oa does not exist between the start point Rs and the end point Re, the controller 30 sets a non-avoidance path R2 as the target path R. The non-avoidance path R2 is a path along which the attachment specific portion 15s moves from the start point Rs to the end point Re while the attachment 15 is not led to the avoidance operation.

In the present embodiment, the controller 30 determines whether the obstacle specific portion Oa exists or not between the start point Rs and the end point Re shown in Fig. 5. When the obstacle specific portion Oa exists between the start point Rs and the end point Re, the controller 30 sets an avoidance path R1 along which the attachment 15 is caused to perform the avoidance operation as the target path R. Therefore, the attachment specific portion 15s can be moved from the start point Rs to the end point Re while making the attachment 15 avoid the obstacle O. As shown in Fig. 8, when the obstacle specific portion Oa does not exist between the start point Rs and the end point Re, the controller 30 sets a non-avoidance path R2 along which the attachment 15 is not caused to perform the avoidance operation as the target path R. Therefore, the attachment specific portion 15s can be moved from the start point Rs to the end point Re without making the attachment 15 perform a wasteful avoidance motion. Consequently, a contact of the attachment 15 with the obstacle O can be suppressed, and concurrently, a wasteful motion of the attachment 15 can be suppressed.

As shown in Fig. 5, a slewing angle θ that is a slewing angle θ of the upper slewing body 13 with respect to the lower travelling body 11 and is formed when the attachment specific portion 15s is at the start point Rs is defined as the start point slewing angle θs. A slewing angle θ formed when the attachment specific portion 15s is at the end point Re is defined as the end point slewing angle θe. A slewing angle θ formed when the attachment specific portion 15s is at the location of the obstacle specific portion Oa is defined as the obstacle slewing angle θο.

The controller 30 determines that the obstacle specific portion Oa exists between the start point Rs and the end point Re when the obstacle slewing angle θο exists between the start point slewing angle θs and the end point slewing angle θe (in the angle range B). As shown in Fig. 8, the controller 30 determines that the obstacle specific portion Oa does not exist between the start point Rs and the end point Re when the obstacle slewing angle θο does not exist between the start point slewing angle θs and the end point slewing angle θe (in the angle range B).

In the above configuration, the controller 30 executes the determination as to whether the obstacle specific portion Oa exists between the start point Rs and the end point Re (the determination as to whether the obstacle O exists or not) on the basis of the slewing angle θ. Therefore, a calculation load to the controller 30 can be alleviated, for example, compared with a case where the determination as to whether the obstacle O exists or not is executed on the basis of whether the obstacle specific portion Oa exists between the start point Rs and the end point Re in a three-dimensional space.

As shown in Fig. 6, the controller 30 (the three-dimensional information acquisition part) sets, when the obstacle O has a shape of a mountain, a top of the obstacle O having the shape of a mountain as the obstacle specific portion Oa.

In the above configuration, the controller 30 executes the determination as to whether the obstacle specific portion Oa exists between the start point Rs and the end point Re (the determination as to whether the obstacle O exists or not) on the basis of three-dimensional information of the top of the obstacle O, i.e., the three-dimensional information of a point. Therefore, a calculation load to the controller 30 can be alleviated compared with a case where the determination as to whether the obstacle O exists or not is executed on the basis of three-dimensional information of the entire obstacle O.

As shown in Fig. 7, the avoidance operation is a motion of the attachment 15 (see Fig. 5) moving along a level higher than the obstacle specific portion Oa to pass over a position of the obstacle specific portion Oa (to the avoidance position R1b) from a position above the start point Rs.

Owing to the above configuration, the attachment 15 (see Fig. 5) can be moved from the start point Rs to the end point Re while reliably avoiding the obstacle specific portion Oa.

### Modification 1

The determination as to whether the obstacle O shown in Fig. 5 exists or not may be executed in various ways. For example, in the above embodiment, the determination as to whether the obstacle O exists or not is executed on the basis of the slewing angle θ. On the other hand, in the modification 1, the determination as to whether the obstacle O exists or not is executed on the basis of a position in the longitudinal direction (longitudinal position). Hereinafter, the modification 1 will be described in relation to differences from the embodiment.

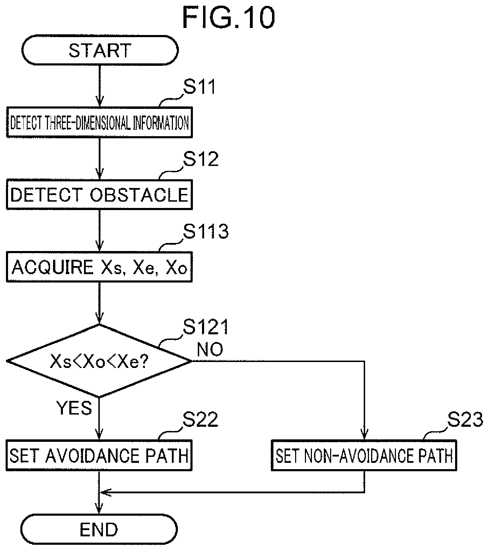

Fig. 10 is a flowchart showing operations of the path setting system 1 according to this modification 1. In the modification 1, Step S113 shown in Fig. 10 is executed in place of Step S13 shown in Fig. 4. In Step S113, the controller 30 shown in Fig. 5 acquires a start point longitudinal position Xs, an end point longitudinal position Xe, and an obstacle longitudinal position Xo. The start point longitudinal position Xs is a position of the start point Rs in the longitudinal direction (position in the longitudinal direction of the upper slewing body 13). The end point longitudinal position Xe is a position of the end point Re in the longitudinal direction. The obstacle longitudinal position Xo is a position of the obstacle specific portion Oa in the longitudinal direction.

In the modification 1, Step S121 shown in Fig. 10 is executed in place of Step S21 shown in Fig. 4. In Step S121, the controller 30 determines that "the obstacle specific portion Oa exists between the start point Rs and the end point Re" when the obstacle longitudinal position Xo exists between the start point longitudinal position Xs and the end point longitudinal position Xe (in the longitudinal extent C) as shown in Fig. 5. In this case (YES in Step S121, see Fig. 10), the controller 30 sets an avoidance path R1 as the target path R (Step S22, see Fig. 10). As shown in Fig. 8, the controller 30 determines that "the obstacle specific portion Oa does not exist between the start point Rs and the end point Re" when the obstacle longitudinal position Xo does not exist between the start point longitudinal position Xs and the end point longitudinal position Xe (in the longitudinal extent C). In this case (NO in Step S121, see Fig. 10), the controller 30 sets a non-avoidance path R2 as the target path R (Step S23, see Fig. 10).

The effect of the modification 1 is described below. As shown in Fig. 5, a position of the start point Rs in the longitudinal direction of the upper slewing body 13 is defined as the start point longitudinal position Xs. A position of the end point Re in the longitudinal direction of the upper slewing body 13 is defined as the end point longitudinal position Xe. A position of the obstacle specific portion Oa in the longitudinal direction of the upper slewing body 13 is defined as the obstacle longitudinal position Xo.

The controller 30 determines that the obstacle specific portion Oa exists between the start point Rs and the end point Re when the obstacle longitudinal position Xo exists between the start point longitudinal position Xs and the end point longitudinal position Xe (in the longitudinal extent C). As shown in Fig. 8, the controller 30 determines that the obstacle specific portion Oa does not exist between the start point Rs and the end point Re when the obstacle longitudinal position Xo does not exist between the start point longitudinal position Xs and the end point longitudinal position Xe (in the longitudinal extent C).

In the above configuration, the determination as to whether the obstacle specific portion Oa exists between the start point Rs and the end point Re, i.e., in the longitudinal extent C (the determination as to whether the obstacle O exists or not) is executed on the basis of a position in the longitudinal direction (longitudinal position). Therefore, a calculation load to the controller 30 can be alleviated, for example, compared with a case where the determination as to whether the obstacle O exists or not is executed on the basis of whether the obstacle specific portion Oa exists between the start point Rs and the end point Re in the three-dimensional space.

### Modification 2

The determination as to whether the obstacle O shown in Fig. 5 exists or not is executed on the basis of a slewing angle θ in the embodiment, and on the basis of a position in the longitudinal direction in the modification 1. On the other hand, in the modification 2, the determination as to whether the obstacle O exists or not is executed on the basis of each of a slewing angle θ and a position in the longitudinal direction X. Hereinafter, the modification 2 will be described in relation to differences from the embodiment.

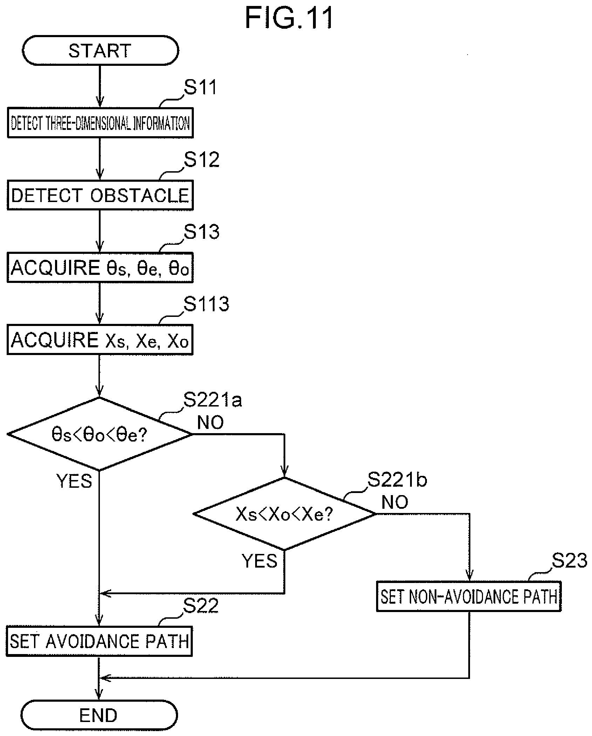

Fig. 11 is a flowchart showing operations of a path setting system 1 according to this modification 2. As shown in Fig. 11, the controller 30 executes Step S13 (see Fig. 4) and Step S113 (see Fig. 10).

In Step S221a, the controller 30 shown in Fig. 5 determines whether the obstacle slewing angle θο exists between the start point slewing angle θs and the end point slewing angle θe (in the angle range B). Further, in Step S221b (see Fig. 11), the controller 30 determines whether the obstacle longitudinal position Xo exists between the start point longitudinal position Xs and the end point longitudinal position Xe (in the longitudinal extent C).

The controller 30 determines that "the obstacle specific portion Oa exists between the start point Rs and the end point Re" in at least one of a time when the obstacle slewing angle θο exists in the angle range B, and a time when the obstacle longitudinal position Xo exists in the longitudinal extent C. Specifically, as shown in Fig. 11, the controller 30 shown in Fig. 5 determines that "the obstacle specific portion Oa exists between the start point Rs and the end point Re" in at least one of the case of YES in Step S221a and the case of YES in Step S221b. In that case, the controller 30 sets the avoidance path R1 as the target path R (Step S22, see Fig. 11).

As shown in Fig. 8, the controller 30 determines that "the obstacle specific portion Oa does not exist between the start point Rs and the end point Re" when the obstacle slewing angle θο does not exist in the angle range B and the obstacle longitudinal position Xo does not exist in the longitudinal extent C. Specifically, as shown in Fig. 11, the controller 30 shown in Fig. 8 determines that the obstacle specific portion Oa does not exist between the start point Rs and the end point Re in the case of NO in Step S221a and NO in Step S221b. In this case, the controller 30 sets the non-avoidance path R2 as the target path R (Step S23, see Fig. 11).

The effect of the modification 2 is described below. As shown in Fig. 5, a slewing angle θ that is a slewing angle θ of the upper slewing body 13 with respect to the lower travelling body 11 and is formed when the attachment specific portion 15s is at the start point Rs is defined as the start point slewing angle θs. A slewing angle θ formed when the attachment specific portion 15s is at the end point Re is defined as the end point slewing angle θe. A slewing angle θ formed when the attachment specific portion 15s is at the location of the obstacle specific portion Oa is defined as the obstacle slewing angle θo. A position of the start point Rs in the longitudinal direction of the upper slewing body 13 is defined as the start point longitudinal position Xs. A position of the end point Re in the longitudinal direction of the upper slewing body 13 is defined as the end point longitudinal position Xe. A position of the obstacle specific portion Oa in the longitudinal direction of the upper slewing body 13 is defined as the obstacle longitudinal position Xo.

The controller 30 determines that the obstacle specific portion Oa exists between the start point Rs and the end point Re in at least one of a time when the obstacle slewing angle θο exists in the angle range B, and a time when the obstacle longitudinal position Xo exists in the longitudinal extent C. The controller 30 determines that the obstacle specific portion Oa does not exist between the start point Rs and the end point Re when the obstacle slewing angle θο does not exist in the angle range B and the obstacle longitudinal position Xo does not exist in the longitudinal extent C. The angle range B lies between the start point slewing angle θs and the end point slewing angle θe. The longitudinal extent C is between the start point longitudinal position Xs and the end point longitudinal position Xe.

Owing to the above configuration, the avoidance path R1 is set as the target path R in at least one of a time when the obstacle slewing angle θο exists in the angle range B, and a time when the obstacle longitudinal position Xo exists in the longitudinal extent C. Therefore, there is more likelihood that an avoidance path R1 is set as the target path R compared with a case where the determination as to whether the obstacle O exists or not is executed on the basis of only one of a slewing angle θ and the longitudinal direction. Consequently, a contact of the attachment 15 with the obstacle O can be further suppressed.

### Modification 3

As shown in Fig. 5, the controller 30 may determine that "the obstacle specific portion Oa exists between the start point Rs and the end point Re" when the obstacle slewing angle θο exists in the angle range B and the obstacle longitudinal position Xo exists in the longitudinal extent C. As shown in Fig. 8, the controller 30 may determine that "the obstacle specific portion Oa does not exist between the start point Rs and the end point Re" in at least one of a time when the obstacle slewing angle θο does not exist in the angle range B, and a time when the obstacle longitudinal position Xo does not exist in the longitudinal extent C. In this case, there is more likelihood that a non-avoidance path R2 is set as the target path R compared with the case where the determination as to whether the obstacle O exists or not is executed on the basis of only one of a slewing angle θ and the longitudinal direction X. Consequently, the attachment 15 can be further kept from performing a wasteful avoidance motion.

### Modification 4

In the example shown in Fig. 5, the obstacle specific portion Oa is a top (a point) of an obstacle O having a shape of a mountain. Fig. 12 is a diagram showing a path setting system 1, a target path R, and the like according to this modification 4 from above. Fig. 13 is a diagram showing the target path R and the like shown in Fig. 12 from rear. In the modification 4, the obstacle O shown in Fig. 12 is a hole formed in the ground (see Fig. 13). In this case, the controller 30 sets an edge of the hole (a linear portion being a boundary between the ground and the hole) as the obstacle specific portion Oa. When the obstacle specific portion Oa is a linear portion, the obstacle slewing angle θο has a range (the obstacle longitudinal position Xo has an extent as well, see Fig. 5). Further, in Step S21 (see Fig. 4), the controller 30 determines whether at least a part of the obstacle slewing angle θο, having the range, falls within the angle range B. In Step S121 (see Fig. 10), the controller 30 determines whether at least a part of the obstacle longitudinal position Xo (see Fig. 5), having the extent, falls within the longitudinal extent C.

As shown in Fig. 12, the obstacle specific portion Oa is an edge of the hole formed in the ground (see Fig. 13).

In the above configuration, the controller 30 executes the determination as to whether the obstacle specific portion Oa exists between the start point Rs and the end point Re (the determination as to whether the obstacle O exists or not) on the basis of the three-dimensional information of the edge of the obstacle O being a hole, i.e., the three-dimensional information of the linear portion. Therefore, the calculation load to the controller 30 can be alleviated compared with a case where the determination as to whether the obstacle O exists or not is executed on the basis of the three-dimensional information of the entire obstacle O.

### Other Modifications

The embodiment and the modifications may be further altered in various ways. For example, mutually different constituent elements of the embodiment and the modifications may be combined. For example, an arrangement and a shape of each constituent element may be changed. For example, a connection between constituent elements shown in Fig. 3 may be altered. For example, the order of steps in the flowcharts shown in Figs. 4, 10, and 11 may be changed. For example, the number of constituent elements may be changed, or a part of the constituent elements may be omitted. For example, what is described as a plurality of mutually different members or parts may be constituted by a single member or part. For example, what is described as a single member or part may include a plurality of separately provided members or parts which are different from each other.

For example, in the above embodiment, a top or an edge of the obstacle O shown in Fig. 5 and the like are defined as the obstacle specific portion Oa (see Figs. 5 and 12). On the other hand, the entire or almost entire shape of the obstacle O may be defined as the obstacle specific portion Oa. In the above embodiment, the controller 30 executes the determination as to whether the obstacle O exists or not on the basis of a slewing angle θ and a position in the longitudinal direction. On the other hand, the controller 30 may execute the determination as to whether the obstacle O exists or not on the basis of a three-dimensional position. Specifically, for example, the determination as to whether the obstacle O exists or not may be executed on the basis of whether the three-dimensional positional information of a line connecting the start point Rs and the end point Re overlaps with the three-dimensional position and shape of the obstacle O or not. Further, the determination as to whether the obstacle O exists or not may be executed on the basis of whether a three-dimensional locus of the attachment 15, assumed to move along the non-avoidance path R2 (see Fig. 8) from the start point Rs to the end point Re, overlaps with the three-dimensional position and shape of the obstacle O.

The present invention provides a path setting system for use in a working machine including a lower travelling body, an upper slewing body mounted on the lower travelling body slewably about a slewing central axis extending in a vertical direction, and an attachment mounted on the upper slewing body to perform a work, the path setting system for setting a target path of an attachment specific portion being a specific portion of the attachment. The path setting system includes a three-dimensional information acquisition part that acquires three-dimensional information on an obstacle specific portion being a specific portion of an obstacle around the attachment and a controller that sets a target path of the attachment specific portion from a predetermined start point to a predetermined end point. The controller determines whether the obstacle specific portion exists or not between the start point of the target path and the end point of the target path on the basis of an acquired result by the three-dimensional information acquisition part. The controller sets an avoidance path as the target path when the obstacle specific portion is determined to exist between the start point of the target path and the end point of the target path, and sets a non-avoidance path as the target path when the obstacle specific portion is determined not to exist between the start point and the end point. The avoidance path is a path along which the attachment specific portion moves from the start point to the end point while the attachment is led to an avoidance operation of avoiding the obstacle. The non-avoidance path is a path along which the attachment specific portion moves from the start point to the end point while the attachment is not led to the avoidance operation.

In the configuration, it may be appreciated that the controller determines that the obstacle specific portion exists between the start point and the end point when an obstacle slewing angle exists between a start point slewing angle and an end point slewing angle, and determines that the obstacle specific portion does not exist between the start point and the end point when the obstacle slewing angle does not exist between the start point slewing angle and the end point slewing angle, the start point slewing angle being a slewing angle of the upper slewing body with respect to the lower travelling body when the attachment specific portion is at the start point, the end point slewing angle being a slewing angle of the upper slewing body with respect to the lower travelling body when the attachment specific portion is at the end point, and the obstacle slewing angle being a slewing angle of the upper slewing body with respect to the lower travelling body when the attachment specific portion is at a location of the obstacle specific portion.

In the configuration, it may be appreciated that the controller determines that the obstacle specific portion exists between the start point and the end point when the obstacle longitudinal position exists between the start point longitudinal position and the end point longitudinal position, and determines that the obstacle specific portion does not exist between the start point and the end point when the obstacle longitudinal position does not exist between the start point longitudinal position and the end point longitudinal position, the start point longitudinal position being a position of the start point in a longitudinal direction of the upper slewing body, the end point longitudinal position being a position of the end point in the longitudinal direction of the upper slewing body, and the obstacle longitudinal position being a position of the obstacle specific portion in the longitudinal direction of the upper slewing body.

In the configuration, it may be appreciated that the controller determines that the obstacle specific portion exists between the start point and the end point in at least one of a time when an obstacle slewing angle exists between a start point slewing angle and an end point slewing angle, and a time when an obstacle longitudinal position exists between a start point longitudinal position and an end point longitudinal position, and determines that the obstacle specific portion does not exist between the start point and the end point when the obstacle slewing angle does not exist between the start point slewing angle and the end point slewing angle and the obstacle longitudinal position does not exist between the start point longitudinal position and the end point longitudinal position, the start point slewing angle being a slewing angle of the upper slewing body with respect to the lower travelling body when the attachment specific portion is at the start point, the end point slewing angle being a slewing angle of the upper slewing body with respect to the lower travelling body when the attachment specific portion is at the end point, the obstacle slewing angle being a slewing angle of the upper slewing body with respect to the lower travelling body when the attachment specific portion is at a location of the obstacle specific portion, the start point longitudinal position being a position of the start point in a longitudinal direction of the upper slewing body, the end point longitudinal position being a position of the end point in the longitudinal direction of the upper slewing body, and the obstacle longitudinal position being a position of the obstacle specific portion in the longitudinal direction of the upper slewing body.

In the configuration, it may be appreciated that the three-dimensional information acquisition part sets, when the obstacle has a shape of a mountain, a top of the obstacle as the obstacle specific portion.

In the configuration, it may be appreciated that the three-dimensional information acquisition part sets, when the obstacle includes a hole formed in the ground, an edge of the hole as the obstacle specific portion.

In the configuration, it may be appreciated that the avoidance operation is a motion of the attachment moving along a level higher than the obstacle specific portion to pass over a position of the obstacle specific portion from a position above the start point.

## Claims

1. A path setting system for use in a working machine including a lower travelling body, an upper slewing body mounted on the lower travelling body slewably about a slewing central axis extending in a vertical direction, and an attachment mounted on the upper slewing body to perform a work, the path setting system for setting a target path of an attachment specific portion being a specific portion of the attachment, comprising:
a three-dimensional information acquisition part that acquires three-dimensional information on an obstacle specific portion being a specific portion of an obstacle around the attachment; and
a controller that sets a target path of the attachment specific portion from a predetermined start point to a predetermined end point, wherein
the controller determines whether the obstacle specific portion exists or not between the start point of the target path and the end point of the target path on the basis of an acquired result by the three-dimensional information acquisition part,
the controller sets an avoidance path as the target path when the obstacle specific portion is determined to exist between the start point of the target path and the end point of the target path, and sets a non-avoidance path as the target path when the obstacle specific portion is determined not to exist between the start point and the end point,
the avoidance path is a path along which the attachment specific portion moves from the start point to the end point while the attachment is led to an avoidance operation of avoiding the obstacle, and
the non-avoidance path being a path along which the attachment specific portion moves from the start point to the end point while the attachment is not led to the avoidance operation.

2. The path setting system according to claim 1, wherein
the controller determines that the obstacle specific portion exists between the start point and the end point when an obstacle slewing angle exists between a start point slewing angle and an end point slewing angle, and determines that the obstacle specific portion does not exist between the start point and the end point when the obstacle slewing angle does not exist between the start point slewing angle and the end point slewing angle,
the start point slewing angle being a slewing angle of the upper slewing body with respect to the lower travelling body when the attachment specific portion is at the start point,
the end point slewing angle being a slewing angle of the upper slewing body with respect to the lower travelling body when the attachment specific portion is at the end point, and
the obstacle slewing angle being a slewing angle of the upper slewing body with respect to the lower travelling body when the attachment specific portion is at a location of the obstacle specific portion.

3. The path setting system according to claim 1, wherein
the controller determines that the obstacle specific portion exists between the start point and the end point when an obstacle longitudinal position exists between a start point longitudinal position and an end point longitudinal position, and determines that the obstacle specific portion does not exist between the start point and the end point when the obstacle longitudinal position does not exist between the start point longitudinal position and the end point longitudinal position,
the start point longitudinal position being a position of the start point in a longitudinal direction of the upper slewing body,
the end point longitudinal position being a position of the end point in the longitudinal direction of the upper slewing body, and
the obstacle longitudinal position being a position of the obstacle specific portion in the longitudinal direction of the upper slewing body.

4. The path setting system according to claim 1, wherein
the controller:
determines that the obstacle specific portion exists between the start point and the end point in at least one of a time when an obstacle slewing angle exists between a start point slewing angle and an end point slewing angle, and a time when an obstacle longitudinal position exists between a start point longitudinal position and an end point longitudinal position, and
determines that the obstacle specific portion does not exist between the start point and the end point when the obstacle slewing angle does not exist between the start point slewing angle and the end point slewing angle and the obstacle longitudinal position does not exist between the start point longitudinal position and the end point longitudinal position,
the start point slewing angle being a slewing angle of the upper slewing body with respect to the lower travelling body when the attachment specific portion is at the start point,
the end point slewing angle being a slewing angle of the upper slewing body with respect to the lower travelling body when the attachment specific portion is at the end point,
the obstacle slewing angle being a slewing angle of the upper slewing body with respect to the lower travelling body when the attachment specific portion is at a location of the obstacle specific portion,
the start point longitudinal position being a position of the start point in a longitudinal direction of the upper slewing body,
the end point longitudinal position being a position of the end point in the longitudinal direction of the upper slewing body, and
the obstacle longitudinal position being a position of the obstacle specific portion in the longitudinal direction of the upper slewing body.

5. The path setting system according to any one of claims 1 to 4, wherein
the three-dimensional information acquisition part sets, when the obstacle has a shape of a mountain, a top of the obstacle as the obstacle specific portion.

6. The path setting system according to any one of claims 1 to 4, wherein
the three-dimensional information acquisition part sets, when the obstacle includes a hole formed in the ground, an edge of the hole as the obstacle specific portion.

7. The path setting system according to any one of claims 1 to 6, wherein
the avoidance operation is a motion of the attachment moving along a level higher than the obstacle specific portion to pass over a position of the obstacle specific portion from a position above the start point.
